# EUROPÄISCHE PATENTSCHRIFT

(11) **EP 3 685 033 B1**
(45) Veröffentlichungstag und Bekanntmachung des Hinweises auf die Patenterteilung: **02.03.2022**
(21) Anmeldenummer: 18769609.1
(22) Anmeldetag: 04.09.2018
(51) Int. Cl.: F02M 25/028, F02M 25/022

(54) **KRAFTFAHRZEUG MIT WASSEREINSPRITZVORRICHTUNG FÜR EINE BRENNKRAFTMASCHINE**
MOTOR VEHICLE WITH WATER INJECTION DEVICE FOR AN INTERNAL COMBUSTION ENGINE
VÉHICULE AUTOMOBILE AVEC DISPOSITIF D'INJECTION D'EAU POUR UN MOTEUR À COMBUSTION INTERNE

(30) Priorität: 20.09.2017 DE 102017216627
(43) Veröffentlichungstag der Anmeldung: 29.07.2020
(73) Patentinhaber: Robert Bosch GmbH, 70442 Stuttgart (DE)
(72) Erfinder: WOERZ, Stefan, 71665 Vaihingen/Enz (DE); SCHENK, Peter, 71640 Ludwigsburg (DE)
(86) Internationale Anmeldenummer: PCT/EP2018/073683
(87) Internationale Veröffentlichungsnummer: WO 2019/057478

(56) Entgegenhaltungen:
- EP-A1- 2 918 813
- WO-A1-2016/177557

## Beschreibung

### Stand der Technik

Die vorliegende Erfindung betrifft ein Kraftfahrzeug umfassend eine Wassereinspritzvorrichtung für eine Brennkraftmaschine.

Aufgrund steigender Anforderungen an reduzierte Kohlenstoffdioxidemissionen werden Brennkraftmaschinen zunehmend hinsichtlich des Kraftstoffverbrauchs optimiert. Allerdings können bekannte Brennkraftmaschinen in Betriebspunkten mit hoher Last nicht optimal im Hinblick auf den Verbrauch betrieben werden, da der Betrieb durch Klopfneigung und hohe Abgastemperaturen begrenzt ist. Eine mögliche Maßnahme zur Reduzierung der Klopfneigung und zur Senkung der Abgastemperaturen ist die Einspritzung von Wasser. Hierbei sind üblicherweise separate Wassereinspritzsysteme vorhanden, um die Wassereinspritzung zu ermöglichen. So ist beispielsweise aus der DE 10 2015 208 476 A1 ein Wassereinspritzsystem für eine Brennkraftmaschine bekannt. Bei Wassereinspritzsystemen für Brennkraftmaschinen ist normalerweise ein Wassertank vorgesehen, so dass jederzeit Wasser zur Einspritzung in das Saugrohr oder die Brennkammer der Brennkraftmaschine verfügbar ist. Zusätzlich kann bei derartigen Wassereinspritzsystemen Wasser mit Hilfe einer Wassergewinnungsanlage beispielsweise aus dem Abgassystem der Brennkraftmaschine in dem Kraftfahrzeug oder aus der Umgebung des Kraftfahrzeugs gewonnen werden und beispielsweise auch dem Wassertank zugeführt werden. Von dem Wassertank kann Wasser beispielsweise mittels einer Pumpe über eine Verteilervorrichtung zu Einspritzventilen, durch die das Wasser dann beispielsweise in ein Saugrohr oder eine Brennkammer der Brennkraftmaschine eingespritzt wird, befördert werden. Dazu kann, wie bei Einspritzsystemen für Brennstoff, die Verteilervorrichtung, beispielsweise in Form eines Rails, dazu vorgesehen sein Wasser zu speichern und auf mehrere Einspritzventile, durch die das Wasser dann eingespritzt werden kann, zu verteilen.

Eine Besonderheit von Einspritzvorrichtungen für Wasser gegenüber Einspritzvorrichtungen für Brennstoffe ist, dass das Wasser in der Wassereinspritzvorrichtung, insbesondere in dem Wassertank, beispielsweise nach Abstellen der Brennkraftmaschine gefrieren kann. Um die Wassereinspritzvorrichtung dann wieder in Betrieb zu nehmen, muss das gefrorene Wasser aufgetaut werden. Dazu können in der Wassereinspritzvorrichtung beispielsweise elektrische Heizungen vorgesehen sein. Die Dokumente WO 2016/177557 A1, EP 2 918 813 A1 und DE 10 2014 222461 A1 zeigen unterschiedliche Wassereinspritzvorrichtungen mit elektrischen Heizungen oder hydraulischen Wärmetauschern zum Auftauen und Heizen des Wassers.

### Offenbarung der Erfindung

Erfindungsgemäß wird ein Kraftfahrzeug mit Wassereinspritzvorrichtung gemäß Anspruch 1 vorgeschlagen.

### Vorteile der Erfindung

Gegenüber dem Stand der Technik weist die Wassereinspritzvorrichtung für eine Brennkraftmaschine den Vorteil auf, dass die Wassereinspritzvorrichtung durch den Wärmetauscher über eine leistungsfähige Heizung verfügt und nach kurzer Zeit betriebsbereit ist. Der Wärmetauscher ist vorteilhaft unabhängig vom Bordnetz und das Bordnetz wird durch eine Aufheizung des Wassers in der Wassereinspritzvorrichtung durch einen Wärmetauscher nicht belastet. Elektrische Heizungen, die über das Bordnetz betrieben werden müssen, können bei 12 Volt und maximal 40 Ampere höchstens-500 Watt an Heizleistung erzielen, mit speziellen aufwändigen Bordnetzen bis zu 1000 bis 1500W. Diese maximale Heizleistung, die durch eine vom Bordnetz gespeiste elektrische Heizung erzeugt werden kann, reicht allerding nicht aus, um das Wasser in der Wassereinspritzvorrichtung in kurzer Zeit, beispielsweise innerhalb von 10 bis 15 Minuten, aufzutauen, so dass die Wassereinspritzvorrichtung in kurzer Zeit einsatzbereit ist. Durch einen Wärmetauscher in der Wassereinspritzvorrichtung kann eine vergleichsweise hohe Heizleistung erzeugt werden. Durch den hohen Wärmeeintrag durch einen Wärmetauscher sind Heizleistungen über 1000 Watt möglich ohne das Bordnetz zu belasten und ohne erhöhten Kraftstoffverbrauch. Das gefrorene Wasser in der Wassereinspritzvorrichtung, beispielsweise in dem Wassertank, kann dann vorteilhaft schnell aufgetaut werden und die Wassereinspritzung kann in vorteilhaft kurzer Zeit im Bereich von 10 bis 15 Minuten einsatzbereit sein. Durch die Heizleistung des Wärmetauschers kann das Wasser zusätzlich derart stark aufgesetzt werden, dass Mikroorganismen im Wasser, insbesondere im Wassertank, abgetötet werden und dadurch Biokontamination des Wassereinspritzsystems vorteilhaft verhindert wird. Insgesamt stellt ein Wärmetauscher in der Wassereinspritzvorrichtung ein vorteilhaft einfaches und leistungsfähiges System dar um das Wasser in der Wassereinspritzvorrichtung aufzuheizen.

Weitere vorteilhafte Ausgestaltungen und Weiterbildungen der Erfindung werden durch die in den Unteransprüchen angegebenen Merkmale ermöglicht.

Gemäß eines vorteilhaften Ausführungsbeispiels ist es vorgesehen, dass die Wassereinspritzvorrichtung weiterhin eine Rücklaufleitung umfasst, durch die der Wasserinjektor mit dem Wassertank verbunden ist, und die eingerichtet ist, Wasser vom Wasserinjektor zum Wassertank zurückzuführen, wobei der Wärmetauscher in der ersten Leitung und/oder in der zweiten Leitung und/oder in der Rücklaufleitung angeordnet ist. Somit kann das Wasser durch die erste Leitung und/oder durch die zweite Leitung von dem Wassertank weg gefördert werden und durch die Rücklaufleitung wieder in den Wassertank zurückgefördert werden. Somit kann das Wasser vorteilhaft im Kreis gepumpt werden. Das Wasser passiert somit in diesem Kreislauf den Wärmetauscher, der in der ersten Leitung und/oder in der zweiten Leitung und/oder in der Rücklaufleitung angeordnet ist. Somit kann aufgetautes Wasser aus dem Wassertank über die erste Leitung und die zweite Leitung und die Rücklaufleitung an dem Wärmetauscher vorbeigeführt werden, dort durch den Wärmetauscher erwärmt werden, und über die Rücklaufleitung wieder in den Wassertank zurückgeführt werden, wo das erwärmte Wasser den Wassertank erwärmen kann und somit weiteres gefrorenes Wasser in dem Wassertank schmelzen kann. Ist das Wasser im Wassertank beispielsweise zum Großteil gefroren und nur eine geringe Menge Wasser aufgetaut so kann diese geringe Menge über die erste Leitung und die zweite Leitung und die Rücklaufleitung an dem Wärmetauscher vorbeigeführt und dort erwärmt werden und wieder in den Wassertank zurückgefördert werden, wo das durch den Wärmetauscher erhitzte Wasser das restliche Wasser auftauen kann.

Auf diese Weise kann der Wärmetauscher vorteilhaft in einem anderen Bereich des Kraftfahrzeugs angeordnet sein als der Wassertank. So kann der Wärmetauscher beispielsweise in einem Frontbereich des Kraftfahrzeugs angeordnet sein und der Wassertank kann in einem Heckbereich des Fahrzeugs angeordnet sein.

Erfindungsgemäß ist es vorgesehen, dass die Wassereinspritzvorrichtung wenigstens eine Vorheizvorrichtung zum Vorheizen von gefrorenem Wasser umfasst. Durch die Vorheizvorrichtung kann eine geringe Menge von gefrorenem Wasser vorgetaut werden, so dass dem Wassereinspritzsystem eine geringe Menge von aufgetautem Wasser zur Verfügung steht, das zum Wärmetauscher gefördert werden kann, dort erwärmt werden kann und somit weiteres gefrorenes Wasser in dem Wassereinspritzsystem auftauen kann. Die Vorheizvorrichtung muss im Vergleich zum Wärmetauscher nur geringe Heizleistungen liefern und kann so vorteilhaft beispielsweise als elektrische Heizung, die vom Bordnetz gespeist wird, ausgebildet sein.

Gemäß eines nicht beanspruchten Ausführungsbeispiels ist es vorgesehen, dass die Vorheizvorrichtung an dem Förderelement angeordnet ist. Eine an dem Förderelement angeordnete Vorheizvorrichtung kann das Förderelement vorteilhaft von gefrorenem Wasser befreien. Durch die erfindungsgemäß an dem Wassertank angeordnete Vorheizvorrichtung kann gefrorenes Wasser in dem Wassertank vorteilhaft aufgetaut werden und das geschmolzene Wasser dann zu dem Wärmetauscher gefördert werden um dort weiter erwärmt zu werden.

Gemäß eines vorteilhaften Ausführungsbeispiels ist es vorgesehen, dass der Wärmetauscher aus dem Rücklauf einer Fahrgastraumheizung gespeist wird.

Gemäß eines vorteilhaften Ausführungsbeispiels ist es vorgesehen, dass der Wasserinjektor an einen Verteiler angeschlossen ist, wobei die zweite Leitung in den Verteiler mündet, so dass dem Wasserinjektor über die zweite Leitung und den Verteiler Wasser zugeführt werden kann, wobei die Rücklaufleitung in den Verteiler mündet, so dass Wasser aus dem Verteiler über die Rücklaufleitung zu dem Wassertank zurückgeführt werden kann. So kann dem Verteiler über die zweite Leitung Wasser aus dem Wassertank zugeführt werden. Über die Rückleitung kann das Wasser wieder aus dem Verteiler in den Wassertank zurückgeführt werden. Der Verteiler kann somit vorteilhaft von dem Wasser durchflossen werden und somit können beispielsweise bei hohen Temperaturen der Brennkraftmaschine der Verteiler und die Wasserinjektoren durch das den Verteiler durchfließende Wasser vorteilhaft gekühlt werden. Gleichzeitig kann das den Verteiler durchfließende Wasser durch die hohen Temperaturen der Brennkraftmaschine vorteilhaft erwärmt werden. So kann das Wasser nicht nur in den Wärmetauscher sondern auch in dem Verteiler erwärmt werden und somit vorteilhaft höhere Temperaturen erreicht werden. Zusätzlich kann die Rücklaufleitung zum Ausspülen der Luft und zum Kühlen bei hohen Motorraumtemperaturen zur Vermeidung von Dampf genutzt werden.

### Kurze Beschreibung der Zeichnungen

Ausführungsbeispiele der Erfindung sind in der Zeichnung dargestellt und werden in der nachfolgenden Beschreibung näher erläutert. Es zeigen
Fig. 1 eine schematische Ansicht einer Brennkraftmaschine mit einer Wassereinspritzvorrichtung,
Fig. 2 eine Wassereinspritzvorrichtung gemäß eines ersten Ausführungsbeispiels der vorliegenden Erfindung,
Fig. 3 eine Wassereinspritzvorrichtung gemäß eines zweiten Ausführungsbeispiels der vorliegenden Erfindung.

### Ausführungsformen der Erfindung

Nachfolgend wird unter Bezugnahme auf die Figuren eine Wassereinspritzvorrichtung 1 einer Brennkraftmaschine 2 im Detail gemäß verschiedenen Ausführungsbeispielen beschrieben. Insbesondere wird die Brennkraftmaschine 2 nach dem Otto-Prinzip und mit Benzindirekteinspritzung betrieben.

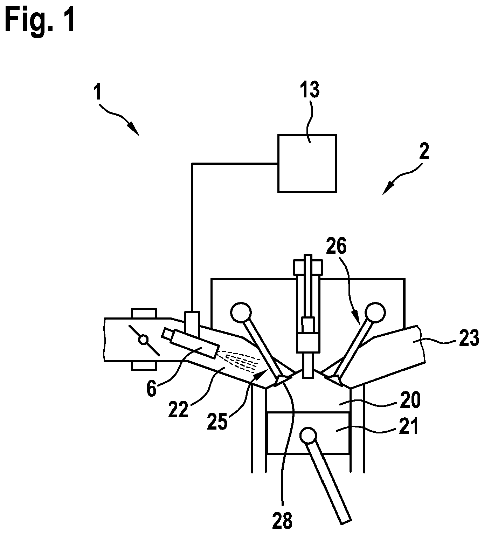

In Fig. 1 sind die Brennkraftmaschine 2 sowie die Wassereinspritzvorrichtung 1 schematisch dargestellt. Die Brennkraftmaschine 2 weist eine Vielzahl von Zylindern auf. Die Brennkraftmaschine 2 umfasst pro Zylinder einen Brennraum 20, in welchem ein Kolben 21 hin und her bewegbar ist. Ferner weist die Brennkraftmaschine 2 pro Zylinder beispielsweise einen Einlasskanal 22 auf, über welchen Luft zum Brennraum 20 zugeführt wird. Abgas wird über einen Abgaskanal 23 abgeführt. Hierzu sind am Einlasskanal 22 ein Einlassventil 25 und am Abgaskanal 23 ein Auslassventil 26 angeordnet. Das Bezugszeichen 24 bezeichnet ferner ein Kraftstoffeinspritzventil.

Die Wassereinspritzvorrichtung 1 ist dabei eine Einspritzvorrichtung durch die Wasser in die Brennkraftmaschine 2 eingespritzt wird. Dabei können neben dem Wasser auch andere Medien mit dem Wasser vermengt sein und zusammen mit dem Wasser gespeichert, gefördert und eingespritzt werden. So können dem Wasser beispielsweise Alkohole, wie beispielsweise Ethanol oder Methanol oder andere Zusatzstoffe, die beispielsweise ein Gefrieren des Wassers verhindern, zugemengt sein.

Die Wassereinspritzvorrichtung 1 umfasst wenigstens einen Wasserinjektor 6. Der Wasserinjektor 6 ist am Einlasskanal 22 angeordnet. Der Wasserinjektor 6 spritzt Wasser in den Einlasskanal 22 der Brennkraftmaschine 2 ein. Der Wasserinjektor 6 wird beispielsweise durch eine Steuereinheit 13 angesteuert. In diesem Ausführungsbeispiel ist ein Wasserinjektor 6 pro Zylinder vorgesehen. Alternativ können zur besseren Aufbereitung oder zur Erhöhung der pro Verbrennungszyklus maximal einspritzbaren Wassermenge zwei Wasserinjektoren pro Zylinder angeordnet sein. Es kann aber beispielsweise auch nur ein Wasserinjektor 6 für alle Zylinder vorgesehen sein.

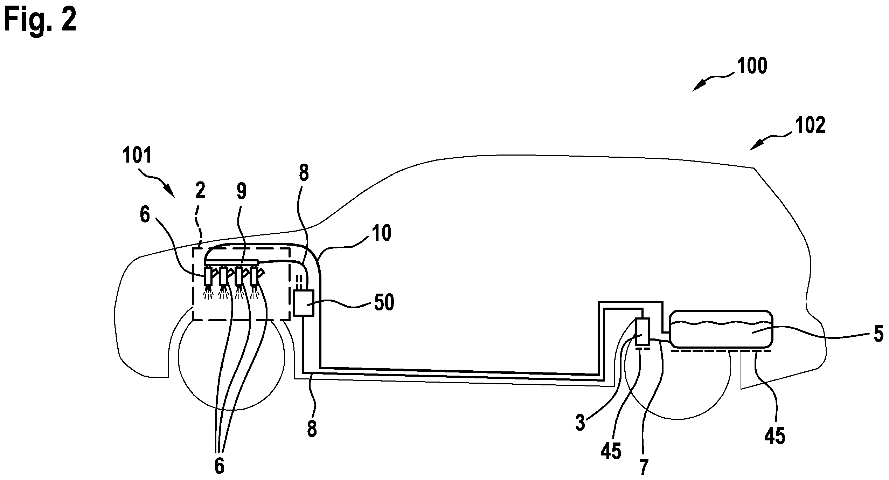

In Fig. 2 ist ein erstes Ausführungsbeispiel einer Wassereinspritzvorrichtung 1 in einem Kraftfahrzeug 100 dargestellt. Die Wassereinspritzvorrichtung 1 umfasst einen Wassertank 5, in dem Wasser gespeichert ist. Weiterhin umfasst die Wassereinspritzvorrichtung 1 Wasserinjektoren 6, die an einem Verteiler 9, der Wasser auf die Wasserinjektoren 6 verteilt, angeordnet sind. Die Wasserinjektoren 6 sind zum Einspritzen von Wasser in die Brennkraftmaschine 2 des Kraftfahrzeugs 100 vorgesehen. Die Wasserinjektoren 6 sind durch eine Leitung 7, 8 mit dem Wassertank 5 verbunden.

Ferner umfasst die Wassereinspritzvorrichtung 1, wie in Figur 2 dargestellt, ein beispielsweise als Pumpe ausgebildetes Förderelement 3. Das Förderelement 3 kann Wasser vom Wassertank 5 zu den Wasserinjektoren 6 fördern. Das Förderelement 3 ist in der Leitung 7, 8, die den Wassertank 5 mit den Wasserinjektoren 6 verbindet, angeordnet. Das Förderelement 3 ist beispielsweise als Pumpe ausgebildet. Das Förderelement 3 teilt die Leitung 7, 8 in eine erste Leitung 7 und eine zweite Leitung 8. Dabei ist der Wassertank 5 durch die erste Leitung 7 mit dem Förderelement 3 verbunden. Weiterhin ist das Förderelement durch die zweite Leitung 8 mit den Wasserinjektoren 6 verbunden. Die zweite Leitung 8 mündet in den Verteiler 9, an den die Wasserinjektoren 6 angeschlossen sind. Wasser aus dem Wassertank 5 kann somit über die erste Leitung 7 zu dem Förderelement 3 weiter durch die zweite Leitung 8 und den Verteiler 9 zu den Wasserinjektoren 6 gefördert werden.

Wie in Fig. 2 dargestellt, umfasst die Wassereinspritzvorrichtung in diesem Ausführungsbeispiel weiterhin eine Rücklaufleitung 10. Die Rücklaufleitung 10 verbindet die Wasserinjektoren 6 mit dem Wassertank 5. Dabei ist die Rücklaufleitung 10 in diesem Ausführungsbeispiel an den Verteiler 9 und an den Wassertank 5 angeschlossen. Somit kann Wasser aus den Wasserinjektoren 6 über den Verteiler 9 weiter durch die Rücklaufleitung 10 zu dem Wassertank 5 zurückgefördert werden. Die Rücklaufleitung 10 ist dazu eingerichtet Wasser vom Wasserinjektor 6 zum Wassertank 5 zurückzuführen.

In diesem Ausführungsbeispiel ist die zweite Leitung 8 an einem ersten Ende des in diesem Ausführungsbeispiel rohrförmigen Verteiler 9 angeschlossen und die Rücklaufleitung 10 an einem zweiten Ende des Verteilers 9 angeschlossen. Somit kann der Verteiler 9 von dem ersten Ende des Verteilers 9 zu dem zweiten Ende des Verteilers 9 von Wasser durchflossen werden.

Weiterhin umfasst die Wassereinspritzvorrichtung 1, wie in Fig. 2 dargestellt, einen Wärmetauscher 50. In diesem Ausführungsbeispiel ist der Wärmetauscher 50 in der zweiten Leitung 8 angeordnet. Der Wärmetauscher 50 kann aber beispielsweise auch in der Rücklaufleitung 10 oder der ersten Leitung 7 angeordnet sein.

Unter einem Wärmetauscher wird im Kontext dieser Anmeldung eine Vorrichtung verstanden, die dazu eingerichtet ist, thermische Energie von wenigstens einem ersten Stoffstrom auf einen zweiten Stoffstrom zu übertragen. So wird bei der Wassereinspritzvorrichtung 1 thermische Energie von einem ersten Stoffstrom, beispielsweise einem Stoffstrom der Fahrgastraumheizung, auf einen Wasserstrom des Wassers in der Wassereinspritzvorrichtung 1 übertragen. Durch die Förderung des Wassers aus dem Wassertank durch die Leitungen 7, 8, 10 der Wassereinspritzvorrichtung 1 entsteht ein Wasserstrom. Dieser Wasserstrom wird als zweiter Stoffstrom durch den Wärmetauscher 50 geführt, wobei in den Wärmetauscher 50 Wärme von einem ersten Stoffstrom, beispielsweise einem Stoffstrom der Fahrgastraumheizung, an den Wasserstrom übertragen wird und somit der Wasserstrom in dem Wärmetauscher 50 aufgeheizt wird.

Wie in Fig. 2 dargestellt, umfasst die Wassereinspritzvorrichtung 1 weiterhin eine Vorheizvorrichtungen 45 zum Vorheizen von gefrorenem Wasser. In diesem Ausführungsbeispiel ist eine Vorheizvorrichtung 45 an dem Förderelement 3 angeordnet und dazu eingerichtet das Förderelement 3 zu beheizen und in dem Förderelement 3 gefrorenes Wasser zumindest teilweise zu schmelzen. Weiterhin ist in diesem Ausführungsbeispiel eine Vorheizvorrichtung 45 an dem Wassertank 5 angeordnet und dazu eingerichtet, den Wassertank 5 zu beheizen und in dem Wassertank 5 gefrorenes Wasser zumindest teilweise zu schmelzen. Die Vorheizvorrichtung 45 kann beispielsweise eine elektrische Heizung sein, die beispielsweise über das Bordnetz des Kraftfahrzeugs gespeist wird.

Wie in Fig. 2 dargestellt, ist in diesem Ausführungsbeispiel der Wassertank 5 in einem Heckbereich 102 des Kraftfahrzeugs 100 angeordnet und der Wärmetauscher 50 in einem Frontbereich 101 des Kraftfahrzeugs 100 angeordnet. Unter dem Frontbereich 101 des Kraftfahrzeugs 100 wird im Kontext der vorliegenden Anmeldung, beispielsweise bei einem zweiaxigen Kraftfahrzeug 100, der Bereich verstanden, der näher an der vorderen Achse des Kraftfahrzeugs 100 liegt als an der hinteren Achse des Kraftfahrzeugs 100. Unter dem Heckbereich 102 des Kraftfahrzeugs 100 wird im Kontext der vorliegenden Anmeldung, beispielsweise bei einem zweiaxigen Kraftfahrzeug 100, der Bereich verstanden, der näher an der hinteren Achse des Kraftfahrzeugs 100 liegt als an der vorderen Achse des Kraftfahrzeugs 100.

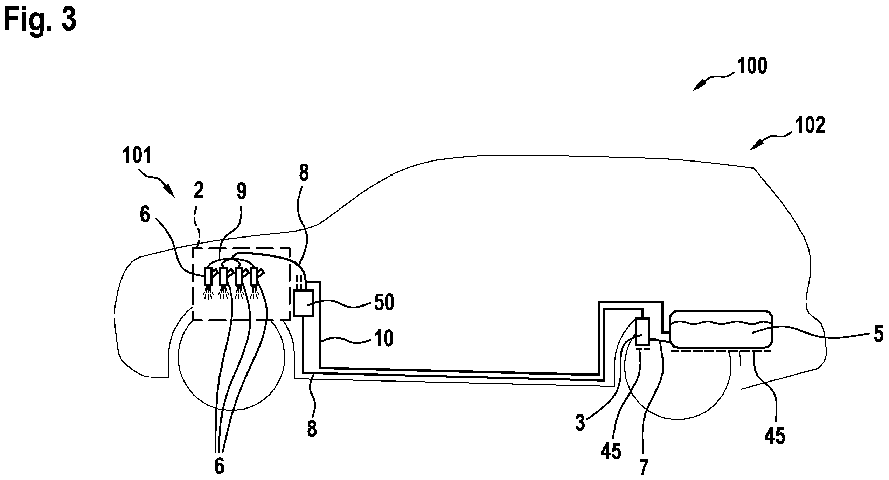

In Fig. 3 ist ein zweites Ausführungsbeispiel der Wassereinspritzvorrichtung 1 dargestellt. Im Unterschied zu dem ersten Ausführungsbeispiel, ist in dem zweiten Ausführungsbeispiel der Wassereinspritzvorrichtung kein rohrförmiger Verteiler 9 vorgesehen. Das Wasser wird in diesem Ausführungsbeispiel über einen Schlauchverteiler auf die Wasserinjektoren 6 verteilt. Die Rücklaufleitung 10 mündet in diesem Ausführungsbeispiel nicht in den Verteiler 9, sondern in die zweite Leitung 8. Somit kann in diesem Ausführungsbeispiel Wasser von den Wasserinjektoren 6 über die zweite Leitung 8 und die Rücklaufleitung 10 zu dem Wassertank 5 zurückgefördert werden.

Selbstverständlich sind auch weitere Ausführungsbeispiele und Mischformen der dargestellten Ausführungsbeispiele möglich.

## Patentansprüche

1. Kraftfahrzeug umfassend eine Wassereinspritzvorrichtung (1), wobei die Wassereinspritzvorrichtung für eine Brennkraftmaschine (2) wenigstens einen Wassertank (5) zum Speichern von Wasser, wenigstens einen Wasserinjektor (6) zum Einspritzen des Wassers in die Brennkraftmaschine (2), wenigstens ein Förderelement (3) zum Fördern von Wasser aus dem Wassertank (5) in den Wasserinjektor (6) umfasst,
wobei der Wassertank (5) durch wenigstens eine erste Leitung (7) mit dem Förderelement (3) verbunden ist und das Förderelement (3) durch wenigstens eine zweite Leitung (8) mit dem Wasserinjektor (6) verbunden ist,
wobei die Wassereinspritzvorrichtung (1) wenigstens einen Wärmetauscher (50) zum Heizen des Wassers umfasst, wobei die Wassereinspritzvorrichtung (1) wenigstens eine Vorheizvorrichtung (45) zum Vorheizen von gefrorenem Wasser umfasst, wobei die Vorheizvorrichtung (45) an dem Förderelement (3) und/oder an dem Wassertank (5) angeordnet ist, **dadurch gekennzeichnet, dass** der Wärmetauscher (50) in einem Frontbereich (101) des Kraftfahrzeugs (100) angeordnet ist und der Wassertank (5) in einem Heckbereich (102) des Kraftfahrzeugs (100) angeordnet ist.

2. Kraftfahrzeug nach Anspruch 1, **dadurch gekennzeichnet, dass** die Wassereinspritzvorrichtung (1) weiterhin eine Rücklaufleitung (10) umfasst, durch die der Wasserinjektor (6) mit dem Wassertank (6) verbunden ist, und die eingerichtet ist, Wasser vom Wasserinjektor (6) zum Wassertank (5) zurückzuführen, wobei der Wärmetauscher (50) in der ersten Leitung (7) und/oder in der zweiten Leitung (8) und/oder in der Rücklaufleitung (10) angeordnet ist.

3. Kraftfahrzeug nach einem der vorhergehenden Ansprüche, **dadurch gekennzeichnet, dass** der Wärmetauscher (50) aus einem Rücklauf einer Fahrgastraumheizung gespeist wird.

4. Kraftfahrzeug nach einem Ansprüche 2 bis 3, **dadurch gekennzeichnet, dass** der Wasserinjektor (6) an einen Verteiler (9) angeschlossen ist,
wobei die zweite Leitung (8) in den Verteiler (9) mündet, so dass dem Wasserinjektor (6) über die zweite Leitung (8) und den Verteiler (9) Wasser zugeführt werden kann,
wobei die Rücklaufleitung (10) in den Verteiler (9) mündet, so dass Wasser aus dem Verteiler (9) über die Rücklaufleitung (10) zu dem Wassertank (5) zurückgeführt werden kann.

## Claims

1. Motor vehicle comprising a water injection device (1),
wherein the water injection device, for an internal combustion engine (2), comprises at least one water tank (5) for storing water, at least one water injector (6) for injecting the water into the internal combustion engine (2), and at least one conveying element (3) for conveying water out of the water tank (5) into the water injector (6),
wherein the water tank (5) is connected to the conveying element (3) by means of at least one first line (7), and the conveying element (3) is connected to the water injector (6) by means of at least one second line (8),
wherein the water injection device (1) comprises at least one heat exchanger (50) for heating the water, wherein the water injection device (1) comprises at least one preheating device (45) for preheating frozen water,
wherein the preheating device (45) is arranged at the conveying element (3) and/or at the water tank (5), **characterized in that** the heat exchanger (50) is arranged in a front region (101) of the motor vehicle (100) and the water tank (5) is arranged in a rear region (102) of the motor vehicle (100).

2. Motor vehicle according to Claim 1, **characterized in that** the water injection device (1) furthermore comprises a return line (10) by means of which the water injector (6) is connected to the water tank (6) and which is configured to return water from the water injector (6) to the water tank (5), wherein the heat exchanger (50) is arranged in the first line (7) and/or in the second line (8) and/or in the return line (10).

3. Motor vehicle according to either one of the preceding claims, **characterized in that** the heat exchanger (50) is fed from a return line of a passenger compartment heater.

4. Motor vehicle according to either one of Claims 2 and 3, **characterized in that** the water injector (6) is connected to a distributor (9),
wherein the second line (8) opens into the distributor (9) such that water can be fed to the water injector (6) via the second line (8) and the distributor (9),
wherein the return line (10) opens into the distributor (9) such that water can be returned from the distributor (9) to the water tank (5) via the return line (10).

## Revendications

1. Véhicule automobile comprenant un dispositif d'injection d'eau (1), le dispositif d'injection d'eau destiné à un moteur à combustion interne (2) comportant au moins un réservoir d'eau (5) destiné à stocker de l'eau, au moins un injecteur d'eau (6) destiné à injecter l'eau dans le moteur à combustion interne (2), au moins un élément de transport (3) destiné à transporter l'eau du réservoir d'eau (5) jusque dans l'injecteur d'eau (6),
le réservoir d'eau (5) étant relié à l'élément de transport (3) par le biais d'au moins une première conduite (7) et l'élément de transport (3) étant relié à l'injecteur d'eau (6) par le biais d'au moins une deuxième conduite (8),
le dispositif d'injection d'eau (1) comprenant au moins un échangeur de chaleur (50) destiné à chauffer l'eau, le dispositif d'injection d'eau (1) comprenant au moins un dispositif de préchauffage (45) destiné à préchauffer l'eau gelée, le dispositif de préchauffage (45) étant disposé sur l'élément de transport (3) et/ou sur le réservoir d'eau (5), **caractérisé en ce que** l'échangeur de chaleur (50) est disposé dans une zone avant (101) du véhicule automobile (100) et le réservoir d'eau (5) est disposé dans une zone arrière (102) du véhicule automobile (100).

2. Véhicule automobile selon la revendication 1, **caractérisé en ce que** le dispositif d'injection d'eau (1) comporte en outre une conduite de retour (10) par le biais de laquelle l'injecteur d'eau (6) est relié au réservoir d'eau (6) et qui est conçue pour ramener de l'eau de l'injecteur d'eau (6) au réservoir d'eau (5), l'échangeur de chaleur (50) étant disposé dans la première conduite (7) et/ou dans la deuxième conduite (8) et/ou dans la conduite de retour (10).

3. Véhicule automobile selon l'une des revendications précédentes, **caractérisé en ce que** l'échangeur de chaleur (50) est alimenté à partir d'un retour d'un radiateur d'habitacle.

4. Véhicule automobile selon l'une des revendications 2 à 3, **caractérisé en ce que** l'injecteur d'eau (6) est raccordé à un distributeur (9),
la deuxième conduite (8) débouchant dans le distributeur (9) de sorte que l'eau peut être amenée à l'injecteur d'eau (6) par le biais de la deuxième conduite (8) et le distributeur (9), la conduite de retour (10) débouchant dans le distributeur (9) de sorte que l'eau puisse être ramenée du distributeur (9) au réservoir d'eau (5) par le biais de la conduite de retour (10).
